(19) Europäisches Patentamt
European Patent Office
Office européen des brevets

(11) **EP 4 206 625 A1**

(12) **EUROPEAN PATENT APPLICATION**

(43) Date of publication:
**05.07.2023 Bulletin 2023/27**

(21) Application number: **21217933.7**

(22) Date of filing: **28.12.2021**

(51) International Patent Classification (IPC):
**G01J 3/02** *(2006.01)* **G01J 3/44** *(2006.01)*

(52) Cooperative Patent Classification (CPC):
**G01J 3/44; G01J 3/027**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Serstech AB**
**227 64 Lund (SE)**

(72) Inventor: **YILMAZ EREN, Mehmet**
**212 52 Malmö (SE)**

(74) Representative: **AWA Sweden AB**
**Box 5117**
**200 71 Malmö (SE)**

(54) **METHOD AND DEVICE FOR SETTING A MEASUREMENT MODE IN A HANDHELD RAMAN SPECTROSCOPY DEVICE**

(57) The present inventive concept relates to method (100) for setting a measurement mode in a handheld Raman spectroscopy device. The method (100) comprises setting (110) a plurality of focal lengths for an adjustable lens (206) of the Raman spectroscopy device (200), wherein a light source (205) of the handheld Raman spectroscopy device (200) is configured to illuminate a sample (10) via the adjustable lens (206), for each focal length of the plurality of focal lengths, recording (120), using an spectrometer (202) of the handheld Raman spectroscopy device (200), a spectrum of light associated with a respective optical response of the sample, thereby recording a plurality of spectra, determining (130) a signal level of a Raman contribution for each spectrum of the plurality of spectra, identifying (140) a spectrum having a highest determined signal level of the Raman contribution among the plurality of spectra, setting (150) the measurement mode of the handheld Raman spectroscopy device (200) by setting a current focal length of the adjustable lens as the focal length associated with the spectrum having the highest determined signal level of the Raman contribution. A Raman spectroscopy device (200) and a non-transitory computer-readable storage medium on which the method (100) is implemented are also provided.

Fig. 1

EP 4 206 625 A1

**Description**

<u>TECHNICAL FIELD</u>

The present disclosure relates to methods and devices for setting a measurement mode in a handheld Raman spectroscopy device.

<u>BACKGROUND</u>

To detect and to determine different substances is highly desired in a large variety of applications ranging from chemical analysis to in-field determination of potentially hazardous and toxic substances. In many situations correct determination of a substance is of utmost importance. For instance, to be able to determine if a substance is hazardous, e.g. explosive, or not is critical since a wrongful determination may result in severe consequences potentially with personnel injuries and material losses. Similarly, it may also be critical to determine if a substance is toxic or not since a wrongful determination may result in serious consequences involving personnel and environmental risks. Further, it is highly important to verify that a drug is correctly synthesized since a wrongfully synthesized drug may become harmful instead of curative for a subject.

When detecting and determining different substances different approaches may be used.

A common way used to investigate properties of a substance is to let the substance undergo a chemical analysis. A chemical analysis of a substance is often accurate but is typically suffering from complexity and the time required for the analysis. Moreover, chemical analysis often require that various further substances or analytes are used or involved in the analysis. Such analysis therefore tends to become costly and time consuming. Another drawback resides in that such analysis are generally too complicated and time consuming to be conducted under field conditions.

Another commonly used approach for detecting and determining different substances is to use some form of spectroscopic analysis. A common type of spectroscopy used in this case is optical spectroscopy where light having interacted with the substance in question is analyzed using a spectrometer. The light interacting with the substance is scattered by the substance resulting in that the scattered light is affected by the substance. Such scattering from a substance can either be elastic or inelastic. In elastic scattering the photons of scattered light exhibit the same energy as the photons impinging on the substance at hand. In inelastic scattering the photons of scattered light exhibit a different energy as compared to the photons impinging on the substance at hand. Inelastically scattered photons therefore either gain or lose energy.

Both elastically and inelastically scattered photons may be used in spectroscopic analyses of substances. When looking at elastically scattered photons certain properties, such as color, of the substance may be determined. However, when it comes to determining a certain substance more sophisticated spectroscopic techniques also relying on inelastically scattered photons are generally required.

Raman spectroscopy is a spectroscopic technique relying on inelastic scattering of photons, known as Raman scattering. In Raman spectroscopy a source of monochromatic light, usually from a laser, is used. The light source may emit light in the visible, near infrared, or near ultraviolet range, although X-rays can also be used. The laser light interacts with molecular vibrations, phonons or other excitations in the molecular system, resulting in that the energy of the laser photons being shifted up or down in the inelastically scattered light thereof. The shift in energy gives information about the vibrational modes in the molecular system at hand. In other words, inelastically light scattered from the molecules of the substance at hand gives rise to a vibrational spectrum that includes of a series of lines or peaks constituting a molecular "fingerprint" for the substance. Hence a substance or material will give rise to a unique Raman spectrum, i.e. its "fingerprint". The unique Raman spectrum makes Raman spectroscopy suitable for identifying or determining substances or materials. In many fields of technology Raman spectroscopy is a well-established spectroscopic technique for rapid identifications of substances and chemicals with high degree of accuracy.

A typical Raman spectrum of a substance shows the shift of Raman wavelengths relative to elastically scattered light, typically referred to as Rayleigh-scattered light. The Rayleigh-scattered light has the same wavelength as the incident light of the light source whereas the Raman wavelengths are shifted up or down relative to the Rayleigh-scattered light. The vertical axis of a Raman spectrum typically represents the intensity of the Raman wavelengths and yields the concentration of the chemical components of the sample or substance, whereas the horizontal axis of a Raman spectrum typically represents the wavelength shift in relation to the Rayleigh light.

However, the light from Raman scattering is typically associated with weak intensities and may therefore be difficult to observe without intense monochromatic excitation and a sensitive detector. Typically, 1 out of $10^6$-$10^9$ photons scattered by a sample is a photon relating to Raman scattering. Since the effect of Raman scattering is weak, it is important to increase the number of scattered photons. Hence, in addition to using an intense light source, a correct placement of the sample relative to the light source is often important in order to increase the intensity of light from Raman scattering. For example, a misplacement of a fraction of a millimeter between the sample and the light source may have negative effects on the quality of the detected Raman signal.

SUMMARY

It is an object to mitigate, alleviate or eliminate one or more of the above-identified deficiencies in the art and disadvantages singly or in any combination and at least partly solve the above-mentioned problem.

According to a first aspect there is provided a method for setting a measurement mode in a handheld Raman spectroscopy device, the method comprising setting a plurality of focal lengths for an adjustable lens of the handheld Raman spectroscopy device, wherein a light source of the handheld Raman spectroscopy device is configured to illuminate a sample via the adjustable lens, for each focal length of the plurality of focal lengths, recording, using a spectrometer of the handheld Raman spectroscopy device, a spectrum of light associated with a respective optical response of the sample, thereby recording a plurality of spectra, determining a signal level of a Raman contribution for each spectrum of the plurality of spectra, identifying a spectrum having a highest determined signal level of the Raman contribution among the plurality of spectra, setting the measurement mode of the handheld Raman spectroscopy device by setting a current focal length of the adjustable lens as the focal length associated with the spectrum having the highest determined signal level of the Raman contribution.

The words "substance" and "sample" are frequently used throughout this text. "Substance" is commonly known as a pure form of matter containing only one type of atoms or molecules. When referring to a "sample", an amount of matter, possibly comprising a compound of substances, is considered. A sample may consist of a single substance, thereby equating the words "sample" and "substance". Generally, a sample may comprise a plurality of different substances. The words sample and substance may however occasionally be used interchangeably, which should not confuse the skilled person.

The method may be a computer implemented method.

Advantageously, the present method allows for setting a measurement mode of the handheld Raman spectroscopy device which improves a relative position between the sample and the focal spot of light emitted by the light source of the handheld Raman spectroscopy device. In particular, in case the sample is located in a container, e.g. a plastic container, a glass container, a plastic bag, etc., it may be difficult to focus the emitted light on the sample within the container. For instance, the light may be focused on the container, whereby scattered light is associated with a material of the container instead of the sample. The present method may thereby allow the identification of a substance located in a container. For example, by performing a series of measurements using different focal lengths to determine a focal length yielding a Raman spectrum having relatively distinct Raman peaks and a relatively small fluorescence contribution. In this manner, the method may provide for a relatively fast approach to determine a measurement mode of the handheld Raman spectroscopy device such that the recorded Raman spectrum actually concerns a sample of interest, and not the container containing the sample. Further, in the recording of each the plurality of spectra, a relatively short exposure time may be used. Each recording preferably uses an exposure time shorter than 100 milliseconds, ms, and the number of spectra is preferably approximately between 10 and 20. Hence, recording all spectra may be done within a few seconds such that an adequate focal length may be determined relatively fast.

The method may further comprise determining a signal level of a fluorescence contribution for each spectrum of the plurality of spectra, and wherein the act of determining the signal level of the Raman contribution for each spectrum of the plurality of spectra comprises determining a signal level of the Raman contribution in relation to the determined fluorescence contribution.

An associated advantage is that an improved identification of the sample having the highest determined signal level of the Raman contribution among the plurality of spectra. This may, in turn, facilitate determining whether a measurement is done on the sample accommodated in a container or inside a wall of the container. Starting measuring for a focal length corresponding to a distance between the adjustable lens and a position being, e.g., inside a wall of the container, the Raman contribution may be relatively small compared to the fluorescence contribution. By measuring for different focal lengths, the relative proportion between the Raman contribution and the fluorescence contribution may change. For a focal distance corresponding to a distance between the adjustable lens and a position in an interior of the container, possibly focusing directly on the sample, the Raman contribution relative to the fluorescence contribution may increase such that conclusions can be made that a preferable focal length has been found. Put differently, the measurement mode of the handheld Raman spectroscopy device may comprise setting the focal length of the adjustable focal length associated with the spectrum of the plurality of spectra for which the Raman contribution relative to the fluorescence contribution is largest. Hence a flexible and user convenient approach for finding an adequate focal point is facilitated.

The method may further comprise recording a measurement spectrum of the sample using the set measurement mode.

Preferably, the recording of the measurement spectrum of the sample is done using a longer exposure time of the handheld Raman spectroscopy device, whereby a more reliable and/or accurate measurement of the spectrum of the sample may be facilitated. This is further elaborated on below.

The method may further comprise determining a substance associated with the measurement spectrum by comparing the measurement spectrum with a database comprising entries correlating substances with measurement spectra.

An associated advantage is that an improved determination and/or identification of the substance may be provided. This since the measurement mode of the handheld Raman spectroscopy device may comprise a focal length of the adjustable lens corresponding to a position in or at the sample.

The plurality of spectra may be recorded using a first exposure time for the handheld Raman spectroscopy device, wherein the act of setting the measurement mode may further comprise setting a second exposure time for the handheld Raman spectroscopy device being an exposure time longer than the first exposure time.

Using a longer exposure time may facilitate reduced noise and may thereby increase a signal-to-ratio, SNR, of the recorded spectrum. This may further reduce uncertainties in the measurements, thereby facilitating reliability of the method.

The act of setting the plurality of focal lengths may comprise applying a plurality of focus voltages to a liquid lens configured to focus the light emitted by the light source, wherein each focus voltage of the plurality of focus voltages is associated with a focal length of the liquid lens.

The liquid lens may provide for a fast shift between different focal lengths, thereby reducing time for setting the measurement mode in the handheld Raman spectrometer.

A further associated advantage is that the plurality of focal lengths may be set without moving optical components. For example, a lens package comprising two or more optical lenses for which the relative distance between the two or more optical lenses may be varied in order to set different focal lengths for the lens package may thereby be avoided, which in turn may allow for a more robust handheld Raman spectroscopy device.

The method may further comprise filtering each spectrum of the plurality of spectra by excluding portions of the spectrum associated with wavelengths pertaining to Rayleigh scattering of the light emitted by the light source and shorter wavelengths.

Hence, portions of each spectrum of the plurality of spectra corresponding to wavelengths being longer than the light source of the Raman spectrometer may be analyzed. These wavelengths may within the art be referred to as the Stokes band, which may typically contain more pronounced signals compared to wavelengths in the spectrum shorter than the light source, which may within the art be referred to as the anti-Stokes band. Analysis of the Stokes band of the spectra may facilitate a reliable measurement and thereby an improved determining and/or identification of the substance.

According to a second aspect the invention refers to a non-transitory computer-readable storage medium having stored thereon program code portions for implementing the method according to the first aspect when executed on a device having processing capabilities.

The above-mentioned features and advantages of the first aspect, when applicable, apply to this second aspect as well. In order to avoid undue repetition, reference is made to the above.

According to a third aspect there is provided a handheld Raman spectroscopy device comprising a spectrometer, circuitry configured to execute a focal length setting function configured to set a plurality of focal lengths for an adjustable lens of the handheld Raman spectroscopy device, wherein a light source of the handheld Raman spectroscopy device is configured to illuminate a sample via the adjustable lens, a recording function configured to, for each focal length, record, using the spectrometer of the handheld Raman spectrometer, a spectrum of light associated with a respective optical response of the sample, thereby recording a plurality of spectra, a signal level determining function configured to determine a signal level of a Raman contribution for each spectrum of the plurality of spectra, a spectrum identifying function configured to identify a spectrum having a highest determined signal level of the Raman contribution among the plurality of spectra, a measurement mode setting function configured to set the measurement mode of the handheld Raman spectroscopy device by setting a current focal length of the adjustable lens as the focal length associated with the spectrum having the highest determined signal level of the Raman contribution.

The circuitry may be further configured to execute a fluorescence contribution determining function configured to determine a signal level of a fluorescence contribution for each spectrum of the plurality of spectra, and wherein the signal level determining function is configured to determine the signal level of the Raman contribution of the plurality of spectra in relation to the fluorescence contribution.

The circuitry may further be configured to execute a measurement spectrum recording function configured to record a measurement spectrum of the sample using the set measurement mode.

The circuitry may further be configured to execute a substance determining function configured to determine a substance associated with the measurement spectrum by comparing the measurement spectrum with a database comprising entries correlating substances with measurement spectra.

The plurality of spectra may be recorded using a first exposure time for the handheld Raman spectroscopy device, and wherein the measurement mode setting function may be configured to set a second exposure time for the handheld Raman spectroscopy device being an exposure time longer than the first exposure time.

The focal length setting function may further comprise a voltage applying function configured to apply a plurality of focus voltages to a liquid lens configured to focus the light emitted by the light source, wherein each focus voltage of the plurality of focus voltages is associated with a focal length of the liquid lens.

The circuitry may further comprise a filtering function configured to filter each spectrum of the plurality of spectra by excluding portions of the spectrum associated with wavelengths pertaining to Rayleigh scattering of the light emitted by the light source and shorter wavelengths.

The above-mentioned features and advantages of the first aspect and/or the second aspect, when applicable, apply to this third aspect as well. In order to avoid undue repetition, reference is made to the above.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or acts of the methods described as such device and method may vary. It is also to be understood that the terminology used herein is for purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

## BRIEF DESCRIPTION OF THE DRAWINGS

The above and other aspects of the present inventive concept will now be described in more detail, with reference to appended figures. The figures should not be considered limiting; instead, they are used for explaining and understanding. Like reference numerals refer to like elements throughout.

Fig. 1 shows a flowchart of a method for for setting a measurement mode in a handheld Raman spectrometer.
Fig. 2 shows a block diagram of a handheld Raman spectrometer.
Fig. 3 shows, highly schematically, a handheld Raman spectrometer while recording Raman spectra of a sample located in a container.
Fig. 4 shows, highly schematically, a handheld Raman spectroscopy device on which the method may be implemented.

## DETAILED DESCRIPTION

The present inventive concept will now be described more fully hereinafter with reference to the accompanying drawings, in which currently preferred variants of the inventive concept are shown. This inventive concept may, however, be varied in many different forms and should not be construed as limited to the variants set forth herein; rather, these variants are provided for thoroughness and completeness, and to fully convey the scope of the inventive concept to the skilled person.

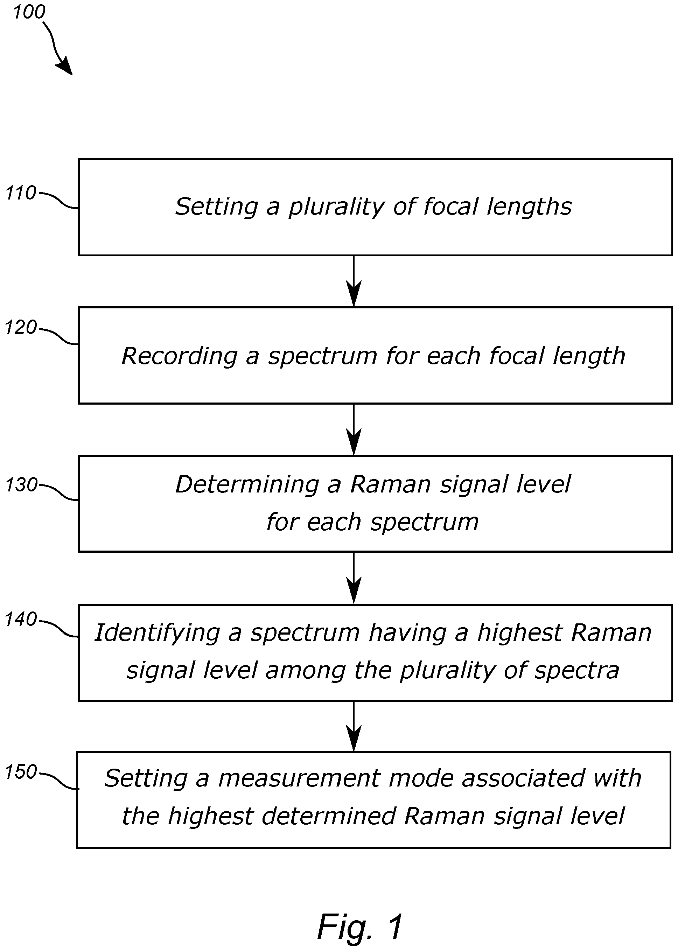

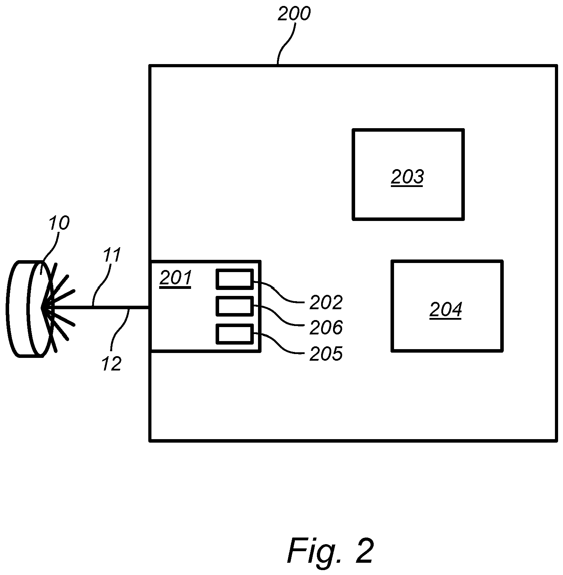

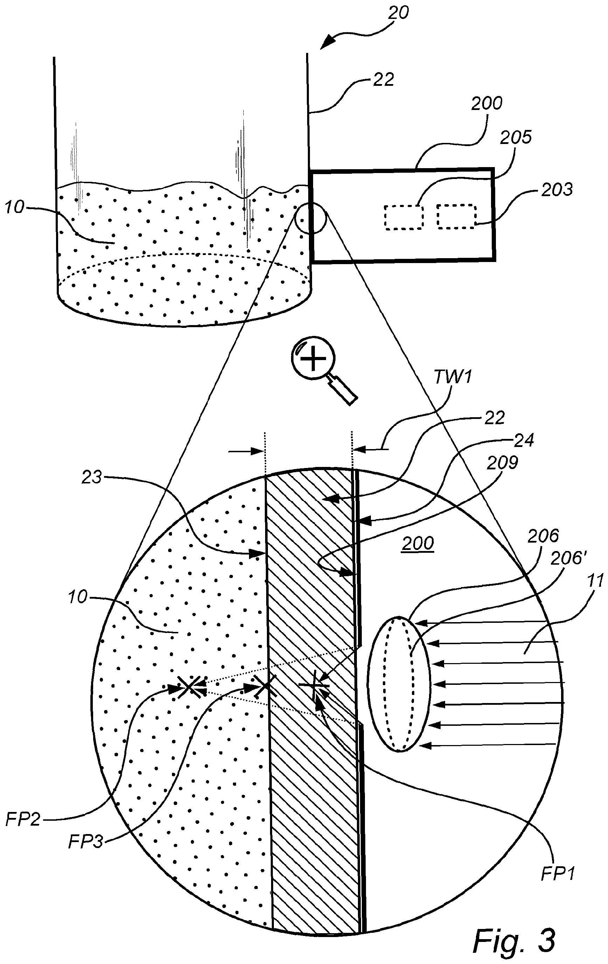

In connection with Fig. 1 there is shown a flowchart of a method 100 for for setting a measurement mode in a handheld Raman spectrometer 200. Fig. 3, schematically showing the handheld Raman spectrometer 200 while recording Raman spectra of a sample 10 located in a container 20, may be viewed in parallel during the description of Fig. 1 to further facilitate the method 100. However, before describing the method (100), a general overview of the handheld Raman spectroscopy device 200 is briefly discussed (Fig. 2).

In connection with Fig. 2, there is shown a block diagram of the handheld Raman spectroscopy device 200. The handheld Raman spectroscopy device 200 may thereby be suitable for use under field conditions. The handheld Raman spectroscopy device 200 may thus be designed such that it is suitable to be hand carried and hand operated by an operator. Hence the handheld Raman spectroscopy device 200 typically includes its own power source and may consequently be used without any external power. Further, the handheld Raman spectroscopy device 200 is typically self-sufficient in the sense that the handheld Raman spectroscopy device 200 may operate on its own without requiring a connection to any external entity or data source. Hence, the handheld Raman spectroscopy device 200 may function in absence of wireless communication means, i.e. without exploiting a cellular network, cloud-based services, or the like. However, the present disclosure may be used to advantage in non-handheld Raman spectroscopy systems, such as Raman spectroscopy systems used in laboratories. Moreover, the Raman spectroscopy device 200 may be connected to e.g. the internet to exchange data such as measurement data or data related to firmware updates with external entities.

The Raman spectroscopy device 200 comprises a spectrometer 202. The Raman spectroscopy device 200 comprises an optical arrangement 201 including the spectrometer 202. The optical arrangement 201 comprises an adjustable lens 206. The adjustable lens 206 may be a liquid lens 206. The depicted spectroscopy device 200 is designed to analyze inelastic scattered light 11 from a sample 10. In other words, the depicted spectroscopy device 200 is designed to analyze a Raman contribution in light 20 scattered from the sample 10. Hence, the depicted spectroscopy device 200 includes a spectrometer 202 which may analyze the Raman contribution in light 11 scattered form the sample 10. The sample 10 may for instance be a solid object, a powder, or a liquid to give a few non-limiting examples.

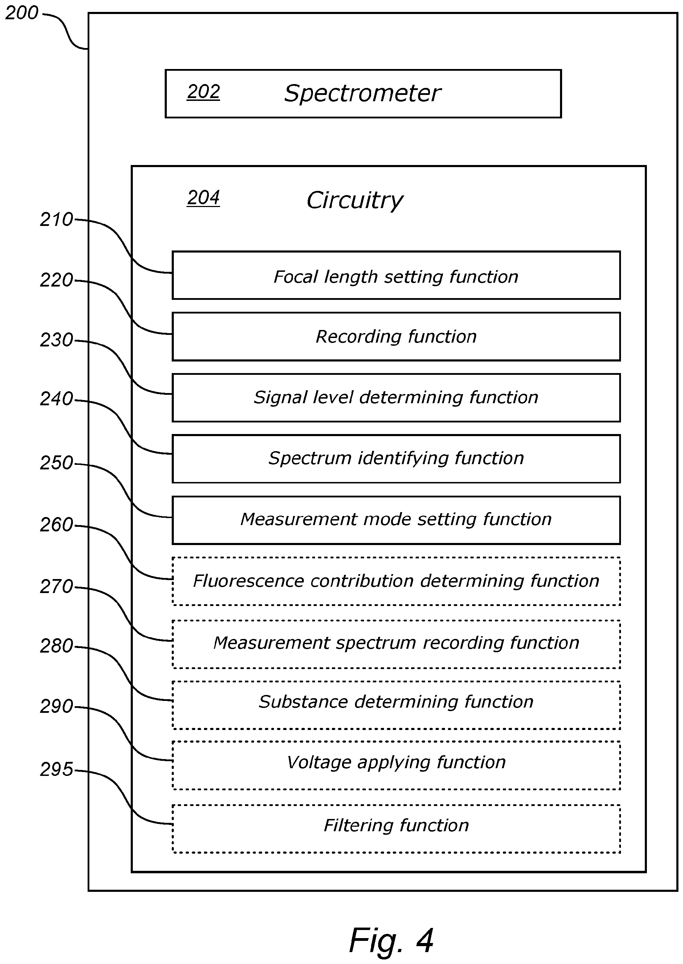

Generally speaking, the handheld Raman spectroscopy device 200 includes an optical arrangement 201 and circuitry 204. The circuitry 204 of Fig. 2 will be elaborated on further in connection with Fig. 4. The optical arrangement 201 and the circuitry 204 are connected to each other such that the respective components may communicate and cooperate in order to analyze light 20 scattered from the sample 10.

The depicted spectroscopy device 200 is configured to emit light 30 towards the sample 10. The emitted light 30 thus interacts with the sample 10 which scatters the light 11. The light 11 thus interacts with the sample 10 which scatters the light 11 elastically and inelastically, hence resulting in scattered light 12. The scattered light 12 is receivable by the optical arrangement 201 of the depicted spectroscopy device 200. The optical arrangement 201 of the depicted spectroscopy device 200 is consequently configured to emit light 11 and receive and analyze scattered light 12.

The spectrometer 202 is configured to analyze a spectral content of light received at an entrance slit of the spectrometer 202. For that reason, a dispersive element of the spectrometer 202 separates the light received at the entrance slit onto an optical sensor 203 of the spectrometer 202. Hence, light received at the entrance slit is separated based on its wavelength components and received at different portions of the sensor 124. This means that the spectrometer 202 may record spectral information by means of a detector of the spectrometer 202. In other words, the spectrometer 202 is configured to record a spectrum of light.

With respect to the brief and general above description of the handheld Raman spectroscopy device 200, the method 100 in connection with Fig. 1 will now be described.

The method 100 comprises setting 110 a plurality of focal lengths for an adjustable lens 206 of the handheld Raman spectroscopy device 100, wherein a light source 205 of the handheld Raman spectroscopy device 200 is configured to illuminate a sample 10 via the adjustable lens 206. The plurality of focal lengths may be predetermined and based on experimental experience. The plurality of focal lengths may be represented by focal length values in a focal length list. The focal length list may preferably comprise monotonically increasing focal length values, wherein each focal length value corresponds to a focal length. Preferably, at least a portion of the focal length values are substantially equidistant. Alternatively, at least a portion of the focal length list may comprise randomly distributed values. The difference between the shortest and the longest focal length among the plurality of focal lengths may be of the order of a few millimeters. By way of example a corresponding focal length range may correspond to focal points in the range of 8-12 millimeters from the adjustable lens, and corresponding focal length values accordingly. Hence, the focal length list may comprise focal length values corresponding to focal lengths in the range of 0-12 mm, wherein the number of focal length values corresponding to focal lengths in the range of 0-8 mm is few or none. Thus, in this example, the focal length values corresponding to focal lengths in the range of 8-12 mm may be substantially equidistant. The difference between the shortest and longest focal length among the plurality of focal lengths may depend on the adjustable lens 206. That is, a certain adjustable lens may be associated with a focal length difference of the order of one centimeter, while a different adjustable lens 206 may be associated with a focal length difference of the order of one millimeter. Alternatively, a specific adjustable lens may have the range as set out in this example, i.e. 8-12 mm, whereas another adjustable lens has the same range interval (i.e. 4 mm) but shifted, e.g. 12-16 mm. The skilled person appreciates that the focal length range and the corresponding focal length list may assume any adequate numbers within the scope of the claims. The number of focal lengths may be between 3 and 50, more preferably between 5 and 35, and even more preferably between 10 and 20. The light source 201 may be a laser having any adequate wavelength. Preferably, the wavelength of the laser lies within the visible spectrum, i.e. approximately 400-800 nm, of the electromagnetic spectrum.

The method 100 further comprises, for each focal length of the plurality of focal lengths, recording 120, using spectrometer 202 of the handheld Raman spectroscopy device 200, a spectrum of light associated with a respective optical response of the sample, thereby recording a plurality of spectra.

The optical sensor 203 is a sensor for detecting electromagnetic waves, i.e. light. The light may have wavelengths within the visible spectrum, i.e. approximately in the range 400-800 nm. However, the optical sensor 203 may further be configured to detect ultraviolet, UV, or infrared, IR, light. For instance, detecting a relatively distinct Raman peak of benzene at a Raman shift having a wavenumber of approximately 1000 cm$^{-1}$ corresponds to light in the IR spectrum, since 1000 cm$^{-1}$ corresponds to the wavelength 10 $\mu$m. Typical wavelengths considered in Raman spectroscopy may lie in the range 4-25 $\mu$m, i.e. in the mid-IR spectrum. Hence, these wavelengths may be relatively large compared to the (785 nm) laser typically used. For practical reasons, a Raman spectrum may be represented in an intensity versus wavelength graph by transforming the wavelength axis according to the equation

$$\lambda\,[mm] = \cfrac{1}{\cfrac{1}{\lambda_{ex}\,[mm]} - \cfrac{Raman\ shift}{10^7}}$$

In the present example, considering the 1000 cm⁻¹ peak (Raman shift = 1000 in the equation) and the 785 nm laser wavelength ($\lambda_{ex}$ = 785 in the equation), the 1000 cm⁻¹ peak is located approximately at the wavelength 850 nm in the corresponding Raman spectrum. Again, the wavelengths are often converted to cm⁻¹. It is appreciated that a Raman spectrum may be represented in many ways in an intensity versus wavelength graph. Hence, below, the words wavenumber and wavelength may be used interchangeably, which should not confuse the skilled person within the present context.

The Raman shift of the Raman peak thereby refers to a wavelength/wavenumber difference between an excitation wavelength/wavenumber and a wavelength of a light source of the Raman spectroscopy device. Per the above, the light source of the Raman spectroscopy device 200 may be a laser emitting a (coherent) laser beam having a wavelength of 785 nm. The optical sensor 203 may be a linear charge-coupled device, CCD. A linear CCD may be a light-sensitive sensor having few pixels, or even a single pixel, in a first dimension, while having a large number of pixels in a dimension perpendicular to the first dimension. For instance, the linear CCD may have 1 pixel in the first dimension and 2048 pixels in the dimension perpendicular to the first dimension. Alternatively, the optical sensor may be a complementary metal-oxide-semiconductor, CMOS, sensor. Yet another possible variant of the optical sensor is a matrix-type CCD or CMOS sensor. As appreciated by the skilled person, "pixel" is herein to be interpreted widely. For a line CCD, a pixel may refer to a wavelength/wavenumber interval for which detected photons are counted. More generally, a pixel has its normal meaning in that being a discrete light sensitive element of the sensor, similar to ordinary digital imaging/photography.

The method 100 further comprises determining 130 a signal level of a Raman contribution for each spectrum of the plurality of spectra. A signal level may be determined by pixel values of individual or a group of nearby pixels on the optical sensor associated with a Raman peak. The signal level may be an average of pixel values among a plurality of Raman peaks, a pixel value of a maximum of a Raman peak, or the like. The skilled person appreciates that there are many ways to determine a signal level from detected sensor data within the art. The spectrum may comprise a certain proportion of fluorescence signals. The fluorescence signals may originate from scattered light from the sample 10 and/or from scattered light from a container 20 in which a substance to be determined is accommodated. The spectrum may however comprise other types of signals or noise. Hence, for each focal length, and thereby, for each corresponding Raman spectrum, fluorescence signals may be subtracted/reduced.

The method 100 further comprises identifying 140 a spectrum having a highest determined signal level of the Raman contribution among the plurality of spectra. The highest determined signal level may thereby be the largest ratio between the Raman contribution and a fluorescence contribution. A strength of the signal level of the Raman contribution may be estimated using a peak detection algorithm whereafter a signal level may be estimated by comparing an intensity of a maximum of a Raman peak and a signal/noise surrounding the Raman peak. A high maximum of the Raman peak relative the signal/noise surrounding the Raman peak may indicate a high signal level. A threshold signal level may be present such that if the signal level is below the threshold signal level, the signal level may be considered noise, fluorescence, or the like. The signal level estimation may be done for a plurality of Raman peaks in each of the plurality of Raman spectra. An arithmetic average of the signal levels for the plurality of Raman peaks, i.e. an average signal level, may serve as a signal level value associated with a specific Raman spectrum of the plurality of Raman spectra. The Raman spectrum having the largest average signal level may be deemed being the Raman spectrum associated with the optimal focal length of the plurality of focal lengths. The skilled person appreciates that a signal level estimation of a specific Raman spectrum can be done in any of many ways standard in the art. For instance, the signal level estimation may be done by simply compare intensities of Raman peaks between different Raman spectra to eventually determine the spectrum having the highest Raman peaks.

The method 100 further comprises setting 150 the measurement mode of the handheld Raman spectroscopy device by setting a current focal length of the adjustable lens 206 as the focal length associated with the spectrum having the highest determined signal level of the Raman contribution.

The method 100 may further comprise determining a signal level of a fluorescence contribution for each spectrum of the plurality of spectra. The act of determining the signal level of the Raman contribution for each spectrum of the plurality of spectra may comprise determining a signal level of the Raman contribution in relation to the determined fluorescence contribution. Starting the measurement procedure by using the smallest focal length corresponding to a focal point FP1 being, e.g. inside a wall of the container 20, a relatively large fluorescence contribution may be recorded. The wording "focal point" refers to a focal length of the adjustable lens such that light emitted by the light source converges to the focal point. A focal length is thereby a property of the adjustable lens 206. Continuing by measuring, using increasing focal lengths FP2, FP3, the relative proportion between the Raman contribution and the fluorescence contribution may change. When the focal length reaches an interior wall side 23 of the container 20, thereby possibly focusing directly on the sample 10 accommodated in the container 20, the fluorescence contribution may decrease such that conclusions can be made that a preferable focal length has been found.

The above is further emphasized in Fig. 3, in particular schematically showing a container wall 22, the wall's thickness TW1 and focal lengths FP1, FP2 in connection thereto. The zoom in Fig. 2 shows a cross-section of the container 20, and thereby an intersection between the sample 10 and the interior wall side 23 of the wall 22 of the container 20. In practice, the sample 10 is often in direct contact with the interior wall side 23, especially, of course, if the sample is a liquid. Here, a first focal length FP1 is a focal length corresponding to a distance, while a proximal side 209 of the Raman spectrometer 200 is in contact with an exterior 24 of the container 20, such that a corresponding focus point is located inside the container wall 22. Hence, the first focal length FP1 is an undesirable focal length for identifying the sample 10 in the container 20. This may correspond to a first focal length of the plurality of focal lengths, i.e. a focus of the light being closes to an aperture of the optical arrangement 201. However, the first focal length may be desirable in the event the handheld Raman spectroscopy device should analyze a sample 10 not accommodated in a container 20. In such a situation the handheld Raman spectroscopy device may be in near contact with the sample 10. The present method 100 may thereby be useful even if the sample 10 is not accommodated in a container 20. Now returning to the present situation (Fig. 3). A recorded spectrum using the first focal length FP1 thereby likely contains characteristics regarding the container 20 itself. Conversely, a second focal length FP2 is a focal length corresponding to a distance, while the proximal side 209 the Raman spectrometer 200 is in contact with the exterior 24 of the container 20, such that a corresponding focus point is inside the container, i.e. directly at the sample. Hence, the second focal length FP2 may be a desirable focal length for identifying the sample 10 in the container 20. However, should the sample be opaque, such that the sample having the form of a powder or another type of solid, the second focal length FP2 may be an undesirable focal length. Further, the sample may diffract the converging light, which may result in a lower intensity at the smallest spot size for the incident light. This may result in an inadequate recorded Raman spectrum possibly containing a relatively large amount of noise or the like. In such a situation it may be desirable using a focal length corresponding to a focal point being inside the container but as close as possible to the interior wall side 23 of the container 20. Such a focal length, thereby possibly being an optimal focal length FP3 under present circumstances, may enable recording an adequate Raman spectrum having a relatively small fluorescence contribution. The optimal focal length FP3 may be denoted a third focal length FP3. The number of focal lengths used in practice, when performing the method 100, may be limited to 10-20 focal lengths, thereby forming a discrete set of focal lengths. These focal lengths may be substantially equidistantly spaced between the minimum and maximum focal length of the set of focal lengths. Due to the discrete set of focal lengths available, the method 100 preferably comprises choosing the focal length closest to the interior wall side 23 while being inside the container 20. It is thereby to be appreciated that there may be a focal length among the discrete set of focal lengths corresponding to a focal point being inside the wall 22 of the container 20 where this focal point is closer to the interior wall side 23. The above may apply also if the sample 10 is at least partially transparent. By way of example, an at least partially transparent sample may be a liquid. However, adequate measurements on the sample may be less restrictive on proximity of the interior wall side 23 for at least partially transparent samples compared to opaque samples. Hence, also the second focal length FP2 may, in practice, be a sufficient focal length for recording an adequate Raman spectrum of the sample 10, in case the sample 10 is at least partially transparent. "Transparent" and "opaque" herein refer to transmittance of the light 207 emitted by the light source of the Raman spectroscopy device. By way of example, a sample may be at least partially transparent when using an infrared laser, while the same sample may be considered opaque using a laser generating light in the visible spectrum, as appreciated by the skilled person. The optimal focal length FP3 may subsequently be used upon recording a measurement spectrum using a longer exposure time of the handheld Raman spectroscopy device 200. The container 20 may be any adequate container for, at least temporarily, accommodating a sample 10 to be identified using Raman spectroscopy. The container 20 may be manufactured by glass, plastic, or the like. The container may be a plastic bag, thereby having a wall thickness being relatively small compared to, e.g. a plastic or glass can.

The method 100 may further comprise recording a measurement spectrum of the sample using the set measurement mode. The recording of the measurement spectrum may thereby utilize the estimated focal length for a specific container having, at least locally, a specific wall thickness. A relatively long exposure time may be used during this recording which may increase the signal-to-noise ratio, thereby achieving a more accurate identification of the sample 10.

The method 100 may further comprise determining a substance associated with the measurement spectrum by comparing the measurement spectrum with a database comprising entries correlating substances with measurement spectra. The database may be stored on a memory of the handheld Raman spectroscopy device 200. The memory may be a non-transitory computer-readable storage medium. The database may be stored on an external storage in communication with the circuitry of the handheld Raman spectroscopy device 200. The external storage may be an external memory, a server, a cloud server etc. The handheld Raman spectroscopy system 200 may be configured to communicate with the external storage via USB, Ethernet, NFC, Wi-Fi, 3G, 4G, 5G, etc.

The plurality of spectra may be recorded using a first exposure time for the optical sensor 203, wherein the act of setting the measurement mode further comprises setting a second exposure time for the handheld Raman spectroscopy device 200 being an exposure time longer than the first exposure time. Each recording preferably uses an exposure time shorter than 100 milliseconds, ms, and the number of spectra is preferably approximately 20. However, exposure times being between the order of 10 milliseconds, ms, to the order of 10 seconds, s, may be possible if need be. As appreciated, using longer exposure times while setting the measurement mode, i.e. recording approximately 20 Raman spectra, may be undesirable from a time aspect, since approximately 10-20 recordings are preferably done while setting the measurement mode.

The act of setting the plurality of focal lengths may comprise applying a plurality of focus voltages to a liquid lens 206 configured to focus the light emitted by the light source 205, wherein each focus voltage of the plurality of focus voltages is associated with a focal length of the liquid lens. The voltages in connection hereto are generated by a voltage source configured to induce a specific voltage in response to execution of a voltage setting function. This is schematically shown in Fig. 2, where two different shapes are shown for the liquid lens 206. The solid line of the liquid lens 206 represents a light refraction associated with the first focal point FP1. The dashed line 206' of the liquid lens 206 represents a light refraction associated with the second focal point FP2. Hence, the liquid lens 206 is configured to achieve a specific physical form upon applying a specific focus voltage, where each physical form is associated with a specific convexity of the liquid lens, and thereby a corresponding specific focal length of the Raman spectrometer.

The method 100 may further comprise filtering each spectrum of the plurality of spectra by excluding portions of the spectrum associated with wavelengths pertaining to Rayleigh scattering of the light emitted by the light source and shorter wavelengths. Hence, the Stokes band of the scattered light 12 from the sample 10. Typically, detected Raman peaks lies in the infrared band of the electromagnetic spectrum.

The method 100 may be implemented on a non-transitory computer-readable storage medium having stored thereon program code portions which, when executed on a device having processing capabilities, performs the method 100.

In connection with Fig. 3 there is, highly schematically, shown a handheld Raman spectroscopy device 200. The method 100 may be implemented on the Raman spectroscopy device 200. Hence, the description in connection with the method 100 above, when applicable, also applies to the description of the Raman spectroscopy device 200 below.

The handheld Raman spectroscopy device 200 comprises a spectrometer 202. Other parts that may be present in the handheld Raman spectroscopy device 200 have been discussed in the block diagram in connection with Fig. 2 above. The handheld Raman spectroscopy device 200 further comprises circuitry 204.

The circuitry 204 may be configured to carry out overall control of functions and operations of the Raman spectroscopy device 200. The circuitry 204 may include a processor, such as a central processing unit, CPU, microcontroller, or microprocessor. The processor is configured to execute program code stored in the circuitry 204 to carry out functions and operations of the Raman spectroscopy device 200.

Executable functions, further described below, may be stored on a memory. The memory may be one or more of a buffer, a flash memory, a hard drive, a removable media, a volatile memory, a non-volatile memory, a random access memory, RAM, or other suitable devices. In a typical arrangement, the memory may include a non-volatile memory for long term data storage and a volatile memory that functions as system memory for the circuitry 204. The memory may exchange data with the circuitry over a data bus. Accompanying control lines and an address bus between the memory and the circuitry may be present.

Functions and operations of the circuitry 204 may be embodied in the form of executable logic routines, e.g., computer-code portions, software programs, etc., that are stored on a non-transitory computer readable medium, e.g., the memory, of the Raman spectroscopy device 200 and are executed by the circuitry 204 by, e.g., using the processor. The functions and operations of the Raman spectroscopy device 200 may be a stand-alone software application or form a part of a software application that carries out additional tasks related to the electronic device. The described functions and operations may be considering a method that the corresponding device is configured to carry out. Also, while the described functions and operations may be implemented in a software, such functionality may as well be carried out via dedicated hardware or firmware, or some combination of hardware, firmware and/or software.

The circuitry 204 is configured to execute a focal length setting function 210 configured to set a plurality of focal lengths for an adjustable lens of the Raman spectroscopy device, wherein a light source 201 of the handheld Raman spectroscopy device is configured to illuminate a sample via the adjustable lens 206.

The circuitry 204 is further configured to execute a recording function 220 configured to, for each focal length, record, using the spectrometer 202 of the handheld Raman spectroscopy device, a spectrum of light associated with a respective optical response of the sample, thereby recording a plurality of spectra.

The circuitry 204 is further configured to execute a signal level determining function 230 configured to determine a signal level of a Raman contribution for each spectrum of the plurality of spectra.

The circuitry 204 is further configured to execute a spectrum identifying function 240 configured to identify a highest signal level among the Raman contribution of the plurality of spectra.

The circuitry 204 is further configured to execute a measurement mode setting function 250 configured to set the measurement mode of the handheld Raman spectroscopy device 200 by setting a current focal length of the adjustable lens as the focal length associated with the spectrum having the highest determined signal level of the Raman contribution.

The circuitry 204 may further be configured to execute a fluorescence contribution determining function 260 configured to determine a signal level of a fluorescence contribution for each spectrum of the plurality of spectra, and wherein the signal level determining function is configured to determine a signal level of the Raman contribution of the plurality of spectra in relation to the fluorescence contribution.

The circuitry 204 may further be configured to execute a measurement spectrum recording function 270 configured to record a measurement spectrum of the sample using the set measurement mode.

The circuitry 204 may further be configured to execute a substance determining function 280 configured to determine a substance associated with the measurement spectrum by comparing the measurement spectrum with a database comprising entries correlating substances with measurement spectra.

The plurality of spectra is recorded using a first exposure time for the handheld Raman spectroscopy device 200.

The measurement mode setting function 250 may further comprise a second exposure time setting function configured to set a second exposure time for the handheld Raman spectroscopy device being an exposure time longer than the first exposure time.

The focal length setting function 210 may further comprise a voltage applying function 290 configured to apply a plurality of focus voltages to a liquid lens configured to focus the light 11 emitted by the light source 205, wherein each focus voltage of the plurality of focus voltages is associated with a focal length of the liquid lens.

The circuitry 204 may further comprise a filtering function 295 configured to filter each spectrum of the plurality of spectra by excluding portions of the spectrum associated with wavelengths pertaining to Rayleigh scattering of the light emitted by the light source and shorter wavelengths.

The Raman spectroscopy device may comprise means for wireless communication, such as Wi-Fi, Bluetooth, mobile network capabilities such as 3G, 4G, and/or 5G, or the like. However, the Raman spectroscopy device may operate without communicating wirelessly. That is, the Raman spectroscopy device 200 may identify a sample 10 by comparing characteristics of the recorded spectrum to a database being stored in storage means, such as a memory or a hard drive, of the Raman spectroscopy device 200. Hence, the Raman spectroscopy device's 200 operating capability is unaltered also in remote field conditions. The Raman spectroscopy device 200 may be powered by a battery.

Accordingly, and in summary, an approach for setting a measurement mode in a handheld Raman spectroscopy device 200 has been exemplified above in a non-limited way. This allows finding an optimal focal length of the Raman spectroscopy device 200 within the order of seconds upon recording 120 a Raman spectrum of a sample 10 located inside a container 20. The optimal focal length may thereafter be used in a subsequent recording, using a longer exposure time, by comparing the recorded Raman spectrum against substances stored in a database of the handheld Raman spectroscopy device 200.

The person skilled in the art realizes that the present invention by no means is limited to the preferred embodiments described above. On the contrary, many modifications and variations are possible within the scope of the appended claims.

Additionally, variations to the disclosed embodiments can be understood and effected by the skilled person in practicing the claimed invention, from a study of the drawings, the disclosure, and the appended claims.

**Claims**

1. A method (100) for setting a measurement mode in a handheld Raman spectroscopy device (200), the method (100) comprising

setting (110) a plurality of focal lengths for an adjustable lens (206) of the handheld Raman spectroscopy device (200), wherein a light source (205) of the handheld Raman spectroscopy device (200) is configured to illuminate a sample (10) via the adjustable lens (206),
for each focal length of the plurality of focal lengths, recording (120), using a spectrometer (202) of the handheld Raman spectroscopy device (200), a spectrum of light associated with a respective optical response of the sample, thereby recording a plurality of spectra,
determining (130) a signal level of a Raman contribution for each spectrum of the plurality of spectra,
identifying (140) a spectrum having a highest determined signal level of the Raman contribution among the plurality of spectra,
setting (150) the measurement mode of the handheld Raman spectroscopy device (200) by setting a current focal length of the adjustable lens as the focal length associated with the spectrum having the highest determined signal level of the Raman contribution.

**2.** The method (100) according to claim 1, further comprising

determining a signal level of a fluorescence contribution for each spectrum of the plurality of spectra, and wherein the act of determining the signal level of the Raman contribution for each spectrum of the plurality of spectra comprises
determining a signal level of the Raman contribution in relation to the determined fluorescence contribution.

**3.** The method (100) according to any one of claim 1 or 2, further comprising
recording a measurement spectrum of the sample using the set measurement mode.

**4.** The method (100) according to claim 3, further comprising
determining a substance associated with the measurement spectrum by comparing the measurement spectrum with a database comprising entries correlating substances with measurement spectra.

**5.** The method (100) according to any one of claims 1-4, wherein the plurality of spectra is recorded using a first exposure time for the handheld Raman spectroscopy device (200), wherein the act of setting the measurement mode further comprises
setting a second exposure time for the handheld Raman spectroscopy device being an exposure time longer than the first exposure time.

**6.** The method (100) according to any one of claims 1-5, wherein the act of setting the plurality of focal lengths comprises applying a plurality of focus voltages to a liquid lens (206) configured to focus the light emitted by the light source (205), wherein each focus voltage of the plurality of focus voltages is associated with a focal length of the liquid lens (206).

**7.** The method (100) according to any one of claims 1-6, further comprising
filtering each spectrum of the plurality of spectra by excluding portions of the spectrum associated with wavelengths pertaining to Rayleigh scattering of the light emitted by the light source and shorter wavelengths.

**8.** A non-transitory computer-readable storage medium having stored thereon program code portions for implementing the method according to any one of claims 1-7 when executed on a device having processing capabilities.

**9.** A handheld Raman spectroscopy device (200) comprising:

a spectrometer (202),
circuitry (204) configured to execute:

a focal length setting function (210) configured to set a plurality of focal lengths for an adjustable lens (206) of the handheld Raman spectroscopy device (200), wherein a light source (205) of the handheld Raman spectroscopy device (200) is configured to illuminate a sample (10) via the adjustable lens (206),
a recording function (220) configured to, for each focal length, record, using the spectrometer (202) of the handheld Raman spectroscopy device (200), a spectrum of light associated with a respective optical response of the sample (10), thereby recording a plurality of spectra,
a signal level determining function (230) configured to determine a signal level of a Raman contribution for each spectrum of the plurality of spectra,
a spectrum identifying function (240) configured to identify a spectrum having a highest determined signal level of the Raman contribution among the plurality of spectra,
a measurement mode setting function (250) configured to set the measurement mode of the handheld Raman spectroscopy device by setting a current focal length of the adjustable lens as the focal length associated with the spectrum having the highest determined signal level of the Raman contribution.

**10.** The handheld Raman spectroscopy device (200) according to claim 9, wherein the circuitry (204) is further configured to execute:

a fluorescence contribution determining function (260) configured to determine a signal level of a fluorescence contribution for each spectrum of the plurality of spectra, and
wherein the signal level determining function (230) is configured to determine the signal level of the Raman contribution of the plurality of spectra in relation to the fluorescence contribution.

**11.** The handheld Raman spectroscopy device (200) according to any one of claim 9 or 10, wherein the circuitry (204) is further configured to execute:
a measurement spectrum recording function (270) configured to record a measurement spectrum of the sample using the set measurement mode.

**12.** The handheld Raman spectroscopy device (200) according to claim 11, wherein the circuitry (204) is further configured to execute:
a substance determining function (280) configured to determine a substance associated with the measurement spectrum by comparing the measurement spectrum with a database comprising entries correlating substances with measurement spectra.

**13.** The handheld Raman spectroscopy device (200) according to any one of claims 9-12, wherein the plurality of spectra is recorded using a first exposure time for the handheld Raman spectroscopy device (200), and wherein the measurement mode setting function (250) is configured to set a second exposure time for the handheld Raman spectroscopy device being an exposure time longer than the first exposure time.

**14.** The handheld Raman spectroscopy device (200) according to any one of claims 9-13, wherein the focal length setting function comprises a voltage applying function (290) configured to apply a plurality of focus voltages to a liquid lens (206) configured to focus the light (11) emitted by the light source (205), wherein each focus voltage of the plurality of focus voltages is associated with a focal length of the liquid lens (206).

**15.** The handheld Raman spectroscopy device (200) according to any one of claims 9-14, wherein the circuitry (204) further comprises:
a filtering function (295) configured to filter each spectrum of the plurality of spectra by excluding portions of the spectrum associated with wavelengths pertaining to Rayleigh scattering of the light emitted by the light source and shorter wavelengths.

*100*

| 110 | Setting a plurality of focal lengths |
|---|---|

↓

| 120 | Recording a spectrum for each focal length |
|---|---|

↓

| 130 | Determining a Raman signal level for each spectrum |
|---|---|

↓

| 140 | Identifying a spectrum having a highest Raman signal level among the plurality of spectra |
|---|---|

↓

| 150 | Setting a measurement mode associated with the highest determined Raman signal level |
|---|---|

*Fig. 1*

Fig. 2

Fig. 3

200

| 202 | Spectrometer |

| 204 | Circuitry |

210

220

230

240

250

260

270

280

290

295

| Focal length setting function |

| Recording function |

| Signal level determining function |

| Spectrum identifying function |

| Measurement mode setting function |

| Fluorescence contribution determining function |

| Measurement spectrum recording function |

| Substance determining function |

| Voltage applying function |

| Filtering function |

*Fig. 4*

## EUROPEAN SEARCH REPORT

Application Number

EP 21 21 7933

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 589 345 A (PERKINELMER SINGAPORE PTE LTD [SG]) 2 June 2021 (2021-06-02) <br><br> * page 18, line 18 - page 19, line 8 * <br> * page 26, line 7 - line 13 * <br> * page 33, line 27 - line 30 * <br> * page 19, line 10 - page 20, line 2 * <br> * page 24, line 19 - line 23 * <br> * page 37, line 7 - line 16 * <br> ----- | 1,3-5, 7-9, 11-13,15 | INV. <br> G01J3/02 <br> G01J3/44 |
| X | WO 2016/193315 A2 (SERSTECH AB [SE]) 8 December 2016 (2016-12-08) <br> * page 1, line 33 - line 35 * <br> * page 4, line 8 - line 34 * <br> * page 5, line 12 - page 6, line 3 * <br> * page 6, line 6 - line 7 * <br> * page 6, line 14 - line 16 * <br> * page 7, line 20 - line 25 * <br> * page 12, line 8 - line 10 * <br> * page 5, line 1 - line 11 * <br> * page 8, line 27 - line 32 * <br> * page 11, line 8 - line 9 * <br> * page 10, line 18 - line 24 * <br> ----- | 1-6,8-14 | |

TECHNICAL FIELDS SEARCHED (IPC)

G01J

The present search report has been drawn up for all claims

| Place of search | Date of completion of the search | Examiner |
|---|---|---|
| Munich | 13 May 2022 | Jacquin, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 7933

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2022

| Patent document cited in search report | | Publication date | Patent family member(s) | | Publication date |
|---|---|---|---|---|---|
| GB 2589345 | A | 02-06-2021 | GB | 2589345 A | 02-06-2021 |
| | | | WO | 2021105689 A1 | 03-06-2021 |
| WO 2016193315 | A2 | 08-12-2016 | CN | 108027279 A | 11-05-2018 |
| | | | EP | 3304013 A2 | 11-04-2018 |
| | | | JP | 2018518719 A | 12-07-2018 |
| | | | SE | 1550706 A1 | 02-12-2016 |
| | | | US | 2018299328 A1 | 18-10-2018 |
| | | | WO | 2016193315 A2 | 08-12-2016 |

EPO FORM P0459

For more details about this annex : see Official Journal of the European Patent Office, No. 12/82